# EUROPÄISCHE PATENTSCHRIFT

(11) **EP 2 658 708 B1**
(45) Veröffentlichungstag und Bekanntmachung des Hinweises auf die Patenterteilung: **23.10.2019**
(21) Anmeldenummer: 11822887.3
(22) Anmeldetag: 29.12.2011
(51) Int. Cl.: B30B 15/02, B30B 11/02, B29C 43/36, B30B 15/04, B30B 15/28, B30B 11/04

(54) **PULVERPRESSE ODER PULVERPRESSENADAPTER SOWIE VERFAHREN ZUM BETRIEB EINER PULVERPRESSE**
POWDER PRESS OR POWDER PRESS ADAPTER, AND METHOD FOR OPERATING A POWDER PRESS
PRESSE À POUDRE OU ADAPTATEUR DE PRESSE À POUDRE ET PROCÉDÉ DE FONCTIONNEMENT D'UNE PRESSE À POUDRE

(30) Priorität: 30.12.2010 DE 102010056476; 05.05.2011 DE 102011100618
(43) Veröffentlichungstag der Anmeldung: 06.11.2013
(73) Patentinhaber: SMS group GmbH, 40237 Düsseldorf (DE)
(72) Erfinder: SOLTY, Walter, 41836 Hückelhoven (DE)
(74) Vertreter: Reuther, Martin
(86) Internationale Anmeldenummer: PCT/DE2011/002187
(87) Internationale Veröffentlichungsnummer: WO 2012/089198

(56) Entgegenhaltungen:
- EP-A2- 2 095 933
- DD-A1- 119 745
- DE-A1- 4 128 895
- DE-A1-102005 035 920
- DE-C1- 4 307 107
- US-A- 3 353 215

## Beschreibung

Die Erfindung betrifft eine Pulverpresse oder einen Pulverpressenadapter bzw. ein Verfahren zum Betrieb einer Pulverpresse.

Insbesondere betrifft die Erfindung eine Pulverpresse oder einen Pulverpressenadapter mit wenigstens einem Matrizenträger und mit wenigstens einem gegen den Matrizenträger verlagerbaren Gegenjoch. Derartige Pulverpressen sind beispielsweise aus der DE 10 2005 052 158 A1 beziehungsweise aus der DE 10 2005 027 296 B3 hinlänglich bekannt. Hierbei offenbaren beide Druckschriften insbesondere einen Pulverpressenadapter, welcher eine bessere Ausnutzung der Presse an sich ermöglicht, da die jeweiligen Adapter außerhalb der Presse vorbereitet und zum Pressen lediglich in die Presse eingebracht werden können. Darüber hinaus weist die Anordnung der DE 10 2005 052 158 A1 neben einer Matrizenplatte, welche vorliegend als Matrizenträger dient, zwei Gegenjochs, eine obere und eine untere Adapterplatte, auf, die jeweils über Führungsstangen vertikal geführt sind. Hierbei versteht es sich, dass je nach konkreter Ausgestaltung jeweils zwei Führungssäulen oder vorzugsweise vier Führungssäulen genutzt werden können. Einen ähnlichen Aufbau zeigt auch die DE 10 2005 027 296 B3, wobei hier mehrere Matrizenplatten zur Anwendung kommen und die Gesamtanordnung ausgehend von der unteren Matrizenplatte lediglich mit einer oberen Traverse als Gegenjoch arbeitet.

Auch die US 2004/0208948 A1 und die JP 2007-100131 A offenbaren Pressen mit einem Matrizenträger und einem Gegenjoch. US3353215 A1 offenbart eine Pulverpresse oder einen Pulverpressenadapter gemäss dem Oberbegriff des Anspruchs 1 oder 2.

Wie schon aus den vorstehend beschriebenen Beispielen ersichtlich, können sowohl der Matrizenträger als auch das Gegenjoch verhältnismäßig komplex ausgestaltet sein. So kann beispielsweise der Matrizenträger aus mehreren Matrizenplatten oder sonstigen Einrichtungen bestehen, welche während des Pressens ortsfest verbleiben und eine Matrize bilden oder tragen, in welcher das zu verpressende Pulver angeordnet und verpresst wird.

Ebenso kann das Gegenjoch Balken oder Plattenform aufweisen sowie gegebenenfalls Bestandteil der Presse selbst aber auch Bestandteil eines Adapters sein. Sowohl an dem Gegenjoch als auch an dem Matrizenträger können weitere Baugruppen angeordnet sein, welche während des Pressens bezüglich des Matrizenträgers bzw. bezüglich des Gegenjochs nicht verlagert werden. Diese können gegebenenfalls definitionsgemäß als Bestandteile des Matrizenträgers beziehungsweise des Gegenjochs angesehen werden.

Während des Verpressens wird das in der Matrize befindliche Pulver über Stempel sowie gegebenenfalls weitere Gegenstempel einem beim Pulverpressen erforderlichen Druck unterzogen.

Wie unmittelbar ersichtlich ist, kommt es bei derartigen Pulverpressen zu umfangreichen Rüstarbeiten, aus welchem Grund gerade Pulverpressenadapter Anwendung finden. Hierbei stellt jedoch auch das Ein- und Ausbringen eines jeweiligen Adapters an sich schon eine verhältnismäßig komplexe Aufgabe dar, bei welcher insbesondere Matrizenträger und Gegenjoch auf wenige µm genau positioniert werden müssen bzw. sollten. Insofern ist es bekannt eine Pulverpresse derart zu betreiben, dass ein Matrizenträger und wenigstens ein gegen den Matrizenträger verlagerbares Gegenjochs währende eines ersten Betriebszustandes durch einen Abstandhalter in einem definierten Abstand gehalten und während eines zweiten Betriebszustandes diesbezüglich freigegeben werden. Die Erfindung betrifft ebenfalls ein derartiges Verfahren.

Es ist Aufgabe vorliegender Erfindung eine gattungsgemäße Pulverpresse bzw. einen gattungsgemäßen Pulverpressenadapter sowie ein gattungsgemäßes Verfahren zum Betrieb einer Pulverpresse bereit zu stellen, bei welchen die Rüstarbeiten betriebssicherer ausgeführt werden können.

Als Lösung schlägt die Erfindung einerseits eine Pulverpresse, bzw. einen Pulverpressenadapter mit den Merkmalen des Anspruchs 1, bzw. des Anspruchs 2 und auch ein Verfahren zum Betrieb einer Pulverpresse mit den Merkmalen des Anspruchs 13 vor.

Eine Pulverpresse oder ein Pulverpressenadapter mit wenigstens einem Matrizenträger und mit wenigstens einem gegen den Matrizenträger verlagerbaren Gegenjoch kann sich durch einen zwischen den Matrizenträger und dem Gegenjoch wirksamen Abstandhalter, der in einem ersten seiner Betriebszustände abstandhaltend und in einem zweiten seiner Betriebszustände nachgiebig ausgebildet ist, auszeichnen. Insbesondere im Zusammenspiel mit einem Pulverpressenadapter kann auf diese Weise betriebssicher ein zuvor definierter Abstand zwischen Gegenjoch und Matrizenträger gewährleistet werden. Dadurch, dass lediglich zwischen dem ersten und dem zweiten Betriebszustand gewechselt werden braucht, können aufwendige Rüstarbeiten, wie beispielsweise ein manuelles Entfernen eines oder mehrerer Abstandhalter vermieden werden. Dieses gewährleistet, insbesondere auch in Abgrenzung zu den in der US 2004/0208948 A1 und der JP 2007-100131 A offenbarten Pressen, welche einen derartigen Wechsel des Betriebszustandes nicht vorsehen sondern einen ständig nachgiebig ausgebildeten Abstandhalter offenbaren, ein hohes Maß an Sicherheit bei Rüstarbeiten.

Der Abstandhalter kann insbesondere federnd, beispielsweise auch als hydraulische Feder, ausgebildet sein, wobei die Federkraft derart gewählt wird, dass im ersten Betriebszustand die Feder durch das Eigengewicht der von ihr getragenen Baugruppe kaum bzw. nur unwesentlich abgesenkt wird. Auch dieses gewährleistet eine hohe Positionssicherheit hinsichtlich des zu erhaltenden Abstandes, wobei hier gegebenenfalls noch ein ergänzender Anschlag, gegen welchen die Feder drückt, vorgesehen sein kann. Da während des Pressens Kräfte von 1.000 t und mehr beispielsweise auch von 1.600 t, auftreten, können hierdurch die Federkräfte für den zweiten Betriebszustand ohne weiteres überwunden werden.

Als weitere Lösung schlägt vorliegende Erfindung unabhängig von ihren übrigen Merkmalen eine Pulverpresse oder einen Pulverpressenadapter mit wenigstens einem Matrizenträger und mit wenigstens einem gegen den Matrizenträger verlagerbaren Gegenjoch vor, die sich durch einen zwischen dem Matrizenträger und dem Gegenjoch wirksamen Abstandhalter, der einen Zylinder und einen Kolben, von welchen einer oder beide eine Durchgangsöffnung durch den Matrizenträger bzw. durch das Gegenjoch und/oder eine Führungsstange umgeben, umfasst, auszeichnen. Eine derartige Zylinder-Kolben-Einheit kann ohne weiteres fluidisch, also hydraulisch oder pneumatisch, abstandhaltende Kräfte aufbringen und leicht und betriebssicher in eine Pulverpresse, aber auch einen Pulverpressenadapter, integriert werden, da dort entsprechende hydraulische oder pneumatische Einrichtungen ohnehin vorhanden sind. Da darüber hinaus die hierbei auftretenden Kräfte im Vergleich zu den übrigen bei Pulverpressen auftretenden Kräften verhältnismäßig gering sind, können bereits sehr kleine Kolben- bzw. Zylinderflächen die benötigten Kräfte aufbringen. Dadurch, dass der Zylinder und/oder der Kolben die Durchgangsöffnung und/oder die Führungsstange umgibt, können Zylinder bzw. Kolben, obgleich sehr große Kräfte aufgebracht werden, bei äußerst kleinem zusätzlichen Bauraum ergänzend an einer Pulverpresse oder an einem Pulverpressenadapter vorgesehen werden. Dieses belässt wiederum mehr Platz für etwaige Rüstarbeiten, wodurch die Betriebssicherheit entsprechend erhöht werden kann.

Darüber hinaus kann ein Abstandhalter, der einen Zylinder und einen Kolben umfasst, auch ohne Weiteres für Hebezwecke genutzt werden, wie sie insbesondere bei Rüstarbeiten an einem Pulverpressenadapter oder an einer Pulverpresse, beispielsweise beim Einbringen von Pulver in den Matrizenträger, durchgeführt werden müssen und letztlich in der DE 10 2005 027 296 B3 bereits offenbart sind. Dementsprechend erweist sich auch unabhängig von ihren übrigen Merkmalen vorliegender Erfindung eine Pulverpresse oder ein Pulverpressenadapter mit wenigstens einem Matrizenträger und mit wenigstens einem gegen den Matrizenträger verlagerbaren Gegenjoch als vorteilhaft, die sich durch eine zwischen dem Matrizenträger und dem Gegenjoch wirksame Hebeeinrichtung, die einen Zylinder und/oder einen Kolben, von welchen einer oder beide eine Durchgangsöffnung durch den Matrizenträger bzw. durch das Gegenjoch und/oder eine Führungsstange umgeben, umfasst, auszeichnen. Zwar können die Vorteile des geringen Bauraums und des hiermit einhergehenden Raumgewinns für Rüstarbeiten auch ohne die Ausgestaltung der Hebeeinrichtung als Abstandhalter, wie dieses bei der DE 10 2005 027 296 B3 vorgesehen ist, entsprechend vorteilhaft genutzt werden. Die Vorteile kumulieren jedoch entsprechend, wenn die Hebeeinrichtung entgegen der Lehre aus der DE 10 2005 027 296 B3 als Abstandhalter ausgebildet ist.

Darüber hinaus können ein Abstandhalter bzw. eine Hebeeinrichtung, der bzw. die einen Zylinder und einen Kolben umfasst, verhältnismäßig einfach in einem ersten Betriebszustand abstandhallend und in einem zweiten Betriebszustand nachgiebig ausgebildet werden, indem entsprechende Ventile und gegebenenfalls Pumpen vorgesehen sind, welche in dem ersten Abstand haltenden Betriebszustand einen erforderlichen Druck bereitstellen und aufrechterhalten und in dem zweiten nachgiebigen Betriebszustand eine Druckminderung beziehungsweise einen Abfluss des entsprechenden Fluides ermöglichen.

Als weitere Lösung schlägt die Erfindung unabhängig von ihren übrigen Merkmalen eine Pulverpresse oder einen Pulverpressenadapter mit wenigstens einem Matrizenträger und mit wenigstens einem gegen den Matrizenträger verlagerbaren Gegenjoch vor, die sich durch eine zwischen den Matrizenträger und dem Gegenjoch wirksame, echt parallel zu einer Stempelachse vorgesehene Hebeeinrichtung auszeichnet. Die Hebeeinrichtung kann auch als Abstandhalter genutzt werden, da sie naturgemäß in der Lage ist, einen Gegenstand anzuheben. Sowie ein derartiges Anheben über einen definierten Abstand erfolgen kann, was beispielsweise durch eine entsprechende Steuerung oder Regelung aber auch durch einen geeigneten Anschlag gewährleistet werden kann, kann eine derartige Hebeeinrichtung als Abstandhalter, der in einem ersten Betriebszustand abstandhaltend und in einem zweiten Betriebszustand nachgiebig ausgebildet ist, genutzt werden. Ebenso versteht es sich, dass eine derartige Hebeeinrichtung verhältnismäßig unkompliziert durch eine Zylinder-Kolben-Einheit umgesetzt werden kann.

Dadurch, dass die Hebeeinrichtung echt parallel zu einer Stempelachse vorgesehen ist, wird durch die Hebeeinrichtung der Weg eines Pressstempels nicht behindert und eine klare Abgrenzung zu Stempeln und deren Bewegung während des Verpressens bzw. nach dem Verpressen beim Öffnen geschaffen.

Auch die Durchgangsöffnung bzw. die Führungsstange, insbesondere wenn letztere von der Durchgangsöffnung umgeben ist, können vorzugsweise echt parallel zur Stempelachse vorgesehen sein.

Vorzugsweise ist der Abstandhalter bzw. die Hebeeinrichtung symmetrisch bezüglich einer echt parallel zu einer Stempelachse vorgesehener Durchgangsöffnung durch den Matrizenträger und/oder durch das Gegenjoch ausgebildet. Insofern handelt es sich aufgrund der echten Parallelität bei einer derartigen Durchgangsöffnung gerade nicht um die Durchgangsöffnung, welche durch die Matrize beziehungsweise für die Matrize bedingt ist. Sowohl der Matrizenträger als auch das Gegenjoch, also eine Oberplatte oder eine Unterplatte bzw. ein Oberjoch oder ein Unterjoch oder aber ähnliches, weisen sehr viele komplexe Strukturen, wie beispielsweise Druckkanäle, Ventileingänge, Steuerungselemente, Schrauben und Weiteres auf. Im Bereich von Durchgangsöffnungen, die insbesondere auch durch mehrere Matrizenplatten hindurchgehen können, ist jedoch in der Regel verhältnismäßig viel Platz vorgesehen, wobei durch eine symmetrische Anordnung eines Abstandhalters bzw. einer Hebeeinrichtung bezüglich einer derartigen Durchgangsöffnung der dort vorhandene Platz optimal ausgenutzt werden kann, sodass ein entsprechender Abstandhalter ohne große weitere Maßnahmen unter Umständen auch in bestehende Systeme integriert werden kann. Je nach konkreter Umsetzung kann hierdurch insbesondere auch der für den Abstandhalter benötigte Bauraum minimiert werden.

Als besonders geeignet hat sich eine Durchgangsöffnung für eine Führungsstange oder aber auch gegebenenfalls einen Zuganker erwiesen, da derartige Öffnungen im Vergleich zu den übrigen Strukturen auf dem Matrizenträger beziehungsweise dem Gegenjoch verhältnismäßig groß sind und mithin in ihrer Umgebung auch verhältnismäßig viel Freiraum für den entsprechenden Abstandhalter verbleibt.

Vorzugsweise umgibt der Abstandhalter bzw. die Hebeeinrichtung die Durchgangsöffnung, was insbesondere durch eine Kolben-Zylinder-Einheit ohne Weiteres umgesetzt werden kann. In einer nicht erfindungsgemässen Ausführungsform kann beispielsweise eine Spiralfeder ohne Weiteres derart vorgesehen sein, dass der Abstandhalter die Durchgangsöffnung und/oder eine entsprechende Führungsstange oder eine ähnliche Baugruppe umgibt, wobei vorliegenden Zusammenhang der Begriff "umgeben" auf eine zur Pressrichtung parallele Projektion der Durchgangsöffnung und des Abstandhalters gerichtet ist.

In einer alternativen Ausführungsform kann der Abstandhalter bzw. die Hebeeinrichtung aus mehreren Teilabstandhaltern bestehen, welche entsprechend symmetrisch um die jeweilige Durchgangsöffnung angeordnet sind. Auch hierdurch kann die Gefahr eines Verkantens entsprechend minimiert werden.

Es versteht sich, dass ein Abstandhalter, der symmetrisch bezüglich einer echt parallel zu einer Stempelachse vorgesehenen Durchgangsöffnung durch den Matrizenträger und/oder durch das Gegenjoch ausgebildet ist, auch unabhängig von den übrigen Merkmalen vorliegender Erfindung bei einer Pulverpresse oder bei einem Pulverpressenadapter mit wenigstens einem Matrizenträger und mit wenigstens einem gegen den Matrizenträger verlagerbaren Gegenjoch entsprechend vorteilhaft zur Anwendung kommen kann.

Die Eingangs gestellte Aufgabe löst kumulativ bzw. alternativ zu den übrigen Merkmalen vorliegender Erfindung auch eine Pulverpresse oder ein Pulverpressenadapter mit wenigstens einem Matrizenträger und mit wenigstens einem gegen den Matrizenträger verlagerbaren Gegenjoch, welche sich durch einen zwischen dem Matrizenträger und dem Gegenjoch wirksamen Abstandhalter bzw. durch eine zwischen dem Matrizenträger und dem Gegenjoch wirksame Hebeeinrichtung aufzeichnen, der bzw. die eine Baugruppe innerhalb des Matrizenträgers und/oder des Gegenjochs umfasst. Hierdurch kann, wie unmittelbar ersichtlich, ebenfalls Bauraum gespart und für Rüstarbeiten zur Verfügung gestellt werden. Als entsprechende Baugruppe dienen in dem Matrizenträger oder dem Gegenjoch vorgesehene Zylinder bzw. Kolben oder Teile hiervon.

Hierbei ist zu betonen, das bei den in der US 2004/0208948 A1 oder der JP 2007-100131 A offenbarten Pressen zwar Federn vorgesehen sind, die, wie in der US 2004/0208948 A1 offenbart, ggf. auch einen Auswerfer durchdringen können. Allerdings liegend die in beiden Druckschriften offenbarten Federn jeweils auf dem Matrizenträger und dem Gegenjoch auf und sind hierin nicht versenkt, so dass gerade der vorstehend beschriebene Bauraumgewinn nicht vorliegt und entsprechend größere Federn genutzt werden müssen.

Die vorstehend beschriebenen Lösungen gehen hierbei von der gemeinsamen Grundidee aus, dass die Eingangs stehende Aufgabe dadurch gelöst werden kann, das Gegenjoch und den Matrizenträger voneinander weg bewegende oder trennende Baugruppen möglichst Platz sparend vorzusehen. Hierzu können einerseits bereits vorhandene Baugruppen selbst, wie beispielsweise eine ohnehin vorhandene Hebeeinrichtung, anders, nämlich beispielsweise als Abstandhalter, genutzt werden oder aber in unmittelbarer räumlicher Nähe bereits vorhandenere Baugruppen, wie beispielsweise in unmittelbarer räumlicher Nähe von Führungsstangen oder Durchgangsbohrungen bzw. innerhalb des Matrizenträgers oder des Gegenjochs, entsprechende Baugruppen vorgesehen werden.

Vorzugsweise weist der Abstandhalter eine Verriegelung auf, sodass er ohne Weiteres freigegeben bzw. nachgiebig ausgebildet werden kann. Eine derartige Verriegelung kann beispielsweise eine mechanische Klinke eine verlagerbare Anlage oder ähnliches sein. Insbesondere kann eine derartige Verriegelung bei einer Kolben-Zylinder-Einheit durch ein entsprechendes Ventil bereitgestellt werden. Eine derartige Verriegelung ermöglicht es insbesondere, den Abstandhalter maschinell anzusteuern und auf diese Weise Handhabefehler auf ein Minimum zu reduzieren. Auf diese Weise kann die Sicherheit baulich einfach maximiert werden.

Vorzugsweise weist die Pulverpresse oder der Pulverpressenadapter wenigstens zwei derartige, insbesondere parallel wirksame, Abstandhalter auf, welche insbesondere symmetrisch bezüglich der Matrize vorgesehen sein können. Auf diese Weise können Kippmomente, welche möglicherweise zu einer Beschädigung von Führungen oder ähnlichem führen können, verhältnismäßig einfach über die bereits vorstehend erläuterten Maßnahmen hinaus beherrscht werden. Gegebenenfalls kann durch die vorstehend bereits beschriebene symmetrische Ausbildung des Abstandhalters bezüglich einer Durchgangsöffnung die Gefahr von Kippmomenten bereits ausreichend auf ein Minimum reduziert werden, so dass auf weitere Abstandhalter, wie sie vorstehend erläutert sind, verzichtet werden kann.

Die Erfindung schlägt des Weiteren zur Lösung der Eingangs gestellten Aufgabe und in Umsetzung der vorstehend beschriebenen Grundidee ein Verfahren zum Betrieb einer Pulverpresse vor, bei welchem ein Matrizenträger und wenigstens ein gegen den Matrizenträger verlagerbares Gegenjoch während eines ersten Betriebszustandes durch einen Abstandhalter in einem definierten Abstand gehalten und während eines zweiten Betriebszustandes diesbezüglich freigegeben werden und welches sich dadurch auszeichnet, dass der Abstandhalter für die Freigabe in Richtung des definierten Abstandes freigegeben wird. Eine derartige Freigabe verzichtet mithin insbesondere auf ein möglicherweise notwendiges Entfernen des Abstandhalters, was baulich aufwendig ist und insbesondere auch ein hohes betriebliches Risiko darstellt. Beispielsweise könnte ein derartiger, zu entfernender Abstandhalter vergessen oder nach dem Pressen, wenn er wieder eingesetzt werden soll, nicht richtig positioniert werden. Dadurch, dass eine Freigabe des Abstandshalters lediglich in Richtung definierten Abstandes erfolgt, kann der Abstandhalter im Übrigen nach wie vor festgelegt verbleiben, sodass weitere Bewegungsfreigaben, welche zum möglichen Fehlern führen können und an sich auch aufwendig sind, vermieden werden können. Eine entsprechende Freigabe kann mithin beispielsweise genau in Pressrichtung erfolgen, während der Abstandhalter im Übrigen in seiner Position verbleibt.

Hierbei gewährleistet das Halten in einem definierten Abstand anders als eine einfaches Tragen durch eine Feder, wie dieses die US 2004/0208948 A1 oder die JP 2007-100131 A offenbaren, betriebssicher den zuvor definierten Abstand. Nach dem Stand der Technik ist dieser Abstand von etwaigen Fehlbelastungen und den konkreten Gewichten, die auf den Federn lasten abhängig und mithin nicht genau definiert.

Vorzugsweise wird zum Freigeben des Abstandhalters dieser entriegelt, was beispielsweise durch Umlegen eines mechanischen Riegels oder durch Öffnen eines entsprechenden Ventils geschehen kann.

Wie unmittelbar ersichtlich sind in der Regel Matrizenträger und Gegenjoch gegeneinander in Pressrichtung verlagerbar. Ebenso wird in der Regel der Abstandhalter in Pressrichtung wirksam sein müssen, weil dieses der Freiheitsgrad ist, welcher dem Matrizenträger und dem Gegenjoch belassen werden.

Je nach konkreter Umsetzung vorliegender Erfindung ermöglicht diese insbesondere einen hohen Automatisierungsgrad der Pulverpresse aber auch eines Pulverpressenadapters, ein hergehend mit einer einem derartigen Automatisierungsgrad entsprechenden Betriebssicherheit. Insbesondere besteht die Möglichkeit, den Abstandhalter maschinell bzw. automatisiert zu lösen und/oder festzulegen, sodass auf diese Weise Bedienfehler auf ein Minimum reduziert werden können.

Im vorliegenden Zusammenhang sei betont, dass vorliegende Erfindung im Abgrenzung gegen die DE 10 2005 027 296 B3 auf eine zwischen den Matrizenträger und Gegenjoch wirksamen Abstandhalter abzielt, während die letztgenannte Druckschrift lediglich Hebeeinrichtungen zwischen verschiedene Matrizenträgern vorsieht. Insofern zielt vorliegende Erfindung auf Pulverpressen oder Pulverpressenadapter mit einem Gegenjoch, welches gerade keinen Matrizenhalter darstellt. Andererseits versteht es sich, dass beispielsweise ein zwischen den Matrizenträger und dem Gegenjoch wirksamer Abstandhalter, der symmetrisch bezüglich einer echt parallel zu einer Stempelachse vorgesehen Durchgangsöffnung durch den Matrizenträger und/oder durch das Gegenjoch ausgebildet ist, auch bei einem Gegenjoch, welches selbst als Matrizenträger ausgebildet ist, entsprechend vorteilhaft ist.

In vorliegendem Zusammenhang bezieht sich die Bezeichnung "Gegenjoch" auf jede Baugruppe, der Pulverpressenadapters, die brückenartig ausgebildet und Presskräfte in einem zentralen Bereich von einem Pressstempel in Richtung der Matrizenträger direkt oder indirekt überträgt. So kann dieses Übertragen einerseits unmittelbar erfolgen, indem das Gegenjoch direkt oder über einen Stempel auf die Matrizenträger Kräfte überträgt. Ebenso kann dieses Übertragen andererseits mittelbar erfolgen, indem diese Kräfte über Zuganker indirekt von dem Gegenjoch auf die Matrizenträger übertragen werden.

Des Weiteren sei betont, dass die vorstehend beschriebene Nachgiebigkeit des Abstandhalters in seinem zweiten Betriebszustand anderes als die Bewegungsmittel der DE 10 2005 027 296 B3, welche einen kontrollierten Bewegungsablauf bedingen sollen und mithin aktiv dem jeweiligen Matrizenträger verlagern, eine passive Bewegung des Abstandshalters ermöglichen. Diese vereinfacht die Verfahrensführung bei einer erfindungsgemäßen Pulverpresse beziehungsweise einem erfindungsgemäßen Pulverpressenadapter erheblich.

Es versteht sich, dass die Merkmale der vorstehend bzw. in den Ansprüchen beschriebenen Lösungen gegebenenfalls auch kombiniert werden können, um die Vorteile entsprechend kumuliert umsetzen zu können.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
- Figur 1: einen schematischen Teilschnitt durch einen Pulverpressenadapter;
- Figur 2: einen Schnitt entlang der Linie II-II nach Figur 1 durch den Pulverpressenadapter nach Figur 1;
- Figur 3: eine schematische Seitenansicht einer Pulverpresse in einer Bereitstellungsposition mit Pulverpressenadapter;
- Figur 4: die Pulverpresse nach Figur 3 in einer Frontansicht;
- Figur 5: die Pulverpresse nach Figuren 3 und 4 in der Ansicht nach Figur 4 ohne Pulverpressenadapter; und
- Figur 6: die Pulverpresse nach Figuren 3 bis 5 in der Ansicht nach Figuren 4 oder 5 mit Pulverpressenadapter in einer Pressposition.

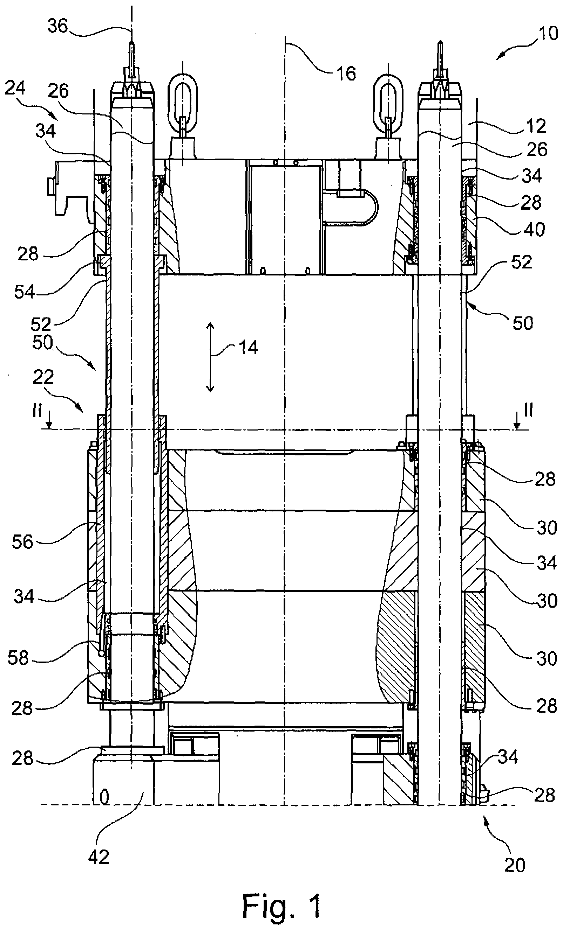

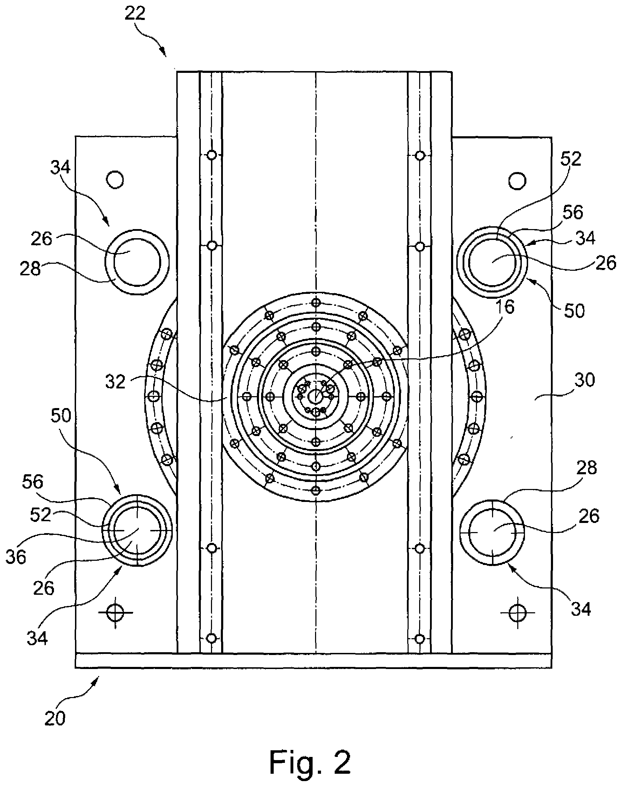

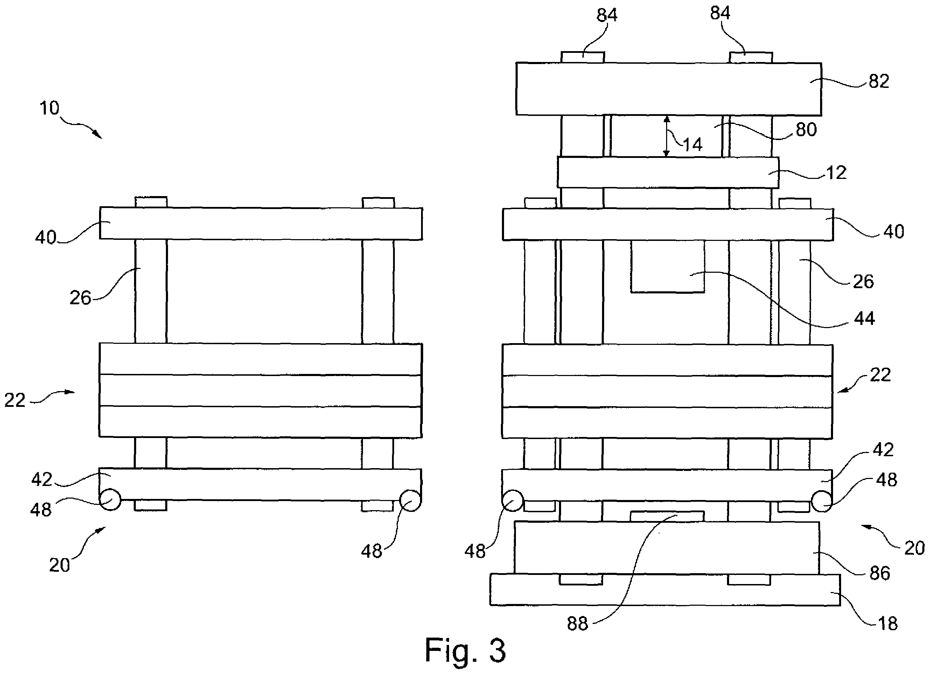

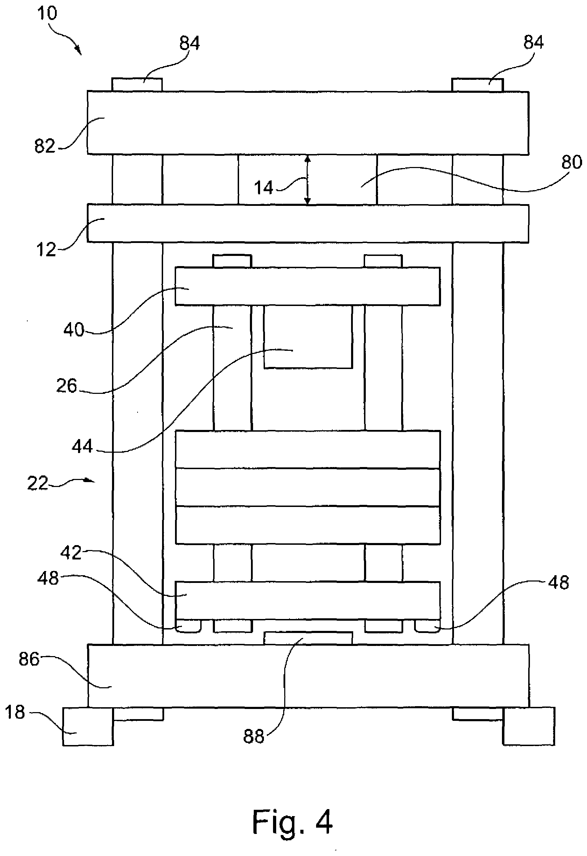

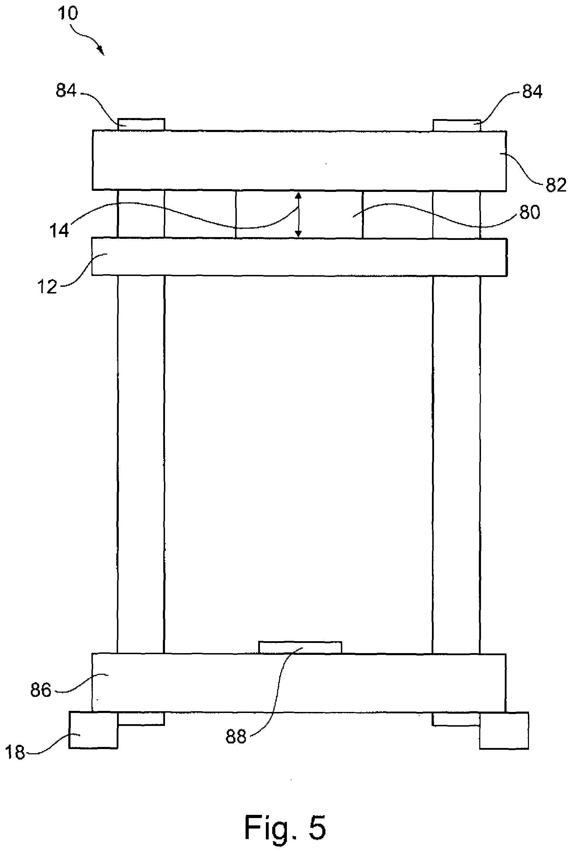

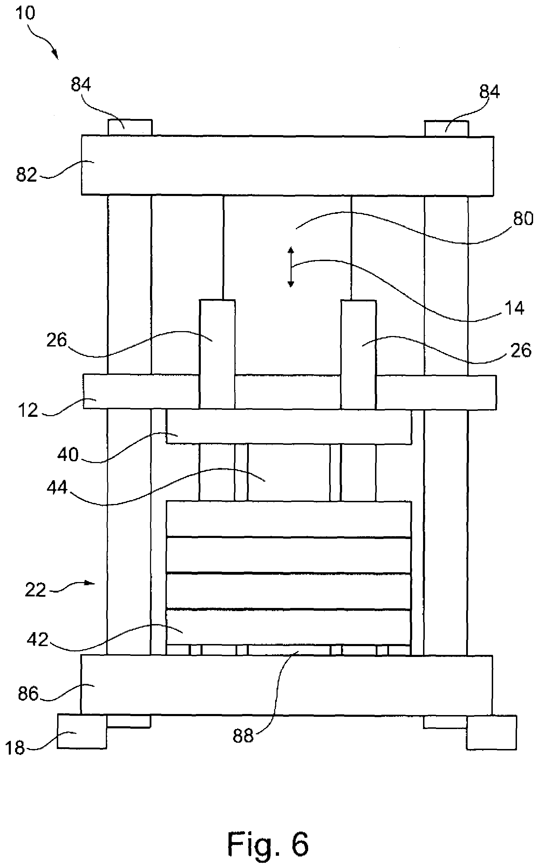

Die in Figuren 1 und 2 lediglich durch ihren Pressschlitten 12 angedeutete Pulverpresse 10 trägt einen Pulverpressenadapter 20, von welchem durchaus eine Vielzahl vorgesehen sein kann, um den Betriebsablauf zu optimieren. Wie insbesondere in Figur 3 zur Verdeutlichung der Arbeitsweise dargestellt, können diese Pulverpressenadapter über Räder 48 auf nicht näher dargestellten jedoch an sich aus dem Stand der Technik hinreichend bekannten Schienen in den eigentlichen Pressenbereich hinein und wieder herausgefahren werden. Die Presskräfte werden bei dem vorliegenden Ausfiihrungsbeispiel durch einen Oberkolben 80 der Pulverpresse 10 in eine Pressrichtung 14 aufgebracht, wobei dieser Oberkolben 80 einerseits auf eine Pressenoberteil 82 und andererseits auf den Pressschlitten 12 wirkt, wie insbesondere aus den Figuren 3 bis 6 ersichtlich. Hierbei werden die Presskräfte über das Pressenoberteil 82, Zuganker 84 und ein Pressenunterteil 86, welches auf einem Aufbaugestell 18 ruht, in an sich bekannter Weise von beiden Seiten der Pressrichtung 14 auf ein Pressgut, welches in dem Pulverpressenadapter 20 vorbereitet wurde, aufgebracht. Hierzu wirkt einerseits der Pressschlitten 12 und andererseits das Pressenunterteil 86 auf den Pulverpressenadapter 20.

Der Pulverpressenadapter 20 umfasst seinerseits einen Matrizenträger 22, welcher vorliegend aus drei Matrizenplatten 30 gebildet ist, die ihrerseits in nicht weiter im Detail erläuterter Weise eine Matrize 32 zur Aufnahme des zu verpressenden Pulvers umfassen bzw. bilden.

Der Matrizenträger 22 weist vier Durchgangsöffnungen 34 auf, in welchen Führungsstangen 26 angeordnet sind, welche in an sich bekannter Weise eine Kopfplatte 40 und eine Fußplatte 42 gegeneinander in Pressrichtung 14 verlagerbar tragen. Hierbei bildet bei vorliegendem Ausführungsbeispiel die Kopfplatte 40 ein Gegenjoch 24 zu der Matrizenplatte 30, wobei bei alternativen Ausführungsbeispielen auch die Fußplatte 42 als Gegenjoch kumulativ bzw. alternativ hierzu dienen kann. Ebenso ist bei diesem Ausführungsbeispiel ein Oberstempel 44 vorgesehen, welcher Presskräfte von der Kopfplatte 40 auf die Matrizenplatten 30 überträgt (siehe insbesondere Figuren 3 bis 6), wobei dieser bei vorliegendem Ausführungsbeispiel passiv ausgebildet ist, jedoch bei anderen Ausführungsbeispielen auch aktiv, ähnlich dem Oberkolben 80, arbeiten kann. Im unteren Bereich weist die Pulverpresse 10 noch eine Adapterklemmeinrichtung 88 auf, welche bei diesem Ausführungsbeispiel den Pulverpressenadapter 20, und insbesondere die Fußplatte 42, in eine Pressposition sichert, wobei hierbei ein ausreichender Abstand für die Räder 48 bzw. eine entsprechende Entlastung vorgesehen ist. In einer alternativen Ausführungsform kann dieser Stelle ein Unterstempel zum Aufbringen der Presskräfte vorgesehen sein.

Über an sich bekannte Gleitlager 28 sind die Kopfplatte 40, die Fußplatte 42 und der Matrizenträger 22 an den Führungsstangen 26 in an sich bekannter Weise gelagert. An zwei diagonal gegenüberliegenden Führungsstangen 26 ist jedoch abweichend hiervon in der Matrizenplatte 30 ein Abstandhalter 50 vorgesehen, der jedoch aufgrund seiner Ausgestaltung ebenfalls führend wirkt, wie nachstehend erläutert. Darüber hinaus ist das Gleitlager 28 des Gegenjochs 24 bzw. der Kopfplatte 40 an den Führungsstangen 26, welche einen Abstandhalter 50 aufweisen, entsprechend angepasst.

Jeder der Abstandhalter 50 weist einen Kolben 52 auf, welcher sich an einer Haltefläche 54 in einer entsprechenden Ausnehmung des Gegenjochs 24 bzw. der Kopfplatte 40 abstützen kann, um einen gewünschten Abstand zu halten. Jeder dieser Kolben 52 umgibt die jeweilige Führungsstange 26 und ist in einem Zylinder 56 angeordnet, der über eine Leitung 58 mit hydraulischem Druck beaufschlagt werden kann. Es versteht sich, dass diese Anordnung durch geeignete Dichteinrichtungen (nicht näher beziffert) eine entsprechende Führung des Gegenjochs 24 sowie des Matrizenträgers 22 an der Führungsstange 26 gewährleisten kann.

Durch geeignetes Beaufschlagen der Leitung 58 mit einer Hydraulikflüssigkeit können die Abstandhalter 50 abstandhaltend eingerichtet werden. Durch Schließen eines entsprechenden Ventils als Verriegelung kann ein derartiger Betriebszustand auch über längere Zeit aufrechterhalten bleiben, ohne dass weitergehende Maßnahmen notwendig werden. Ein Öffnen des entsprechenden Ventils, beispielsweise nur ein wenig, bzw. das Öffnen einer Schnüffelbohrung ermöglichen es, die Abstandhalter 50 nachgiebig einzurichten, sodass ein Pressendruck in Pressrichtung 14 entsprechend wirksam werden kann. In diesem Zusammenhang versteht es sich, dass die vorliegenden Abstandhalter 50 durch ein Beaufschlagen der Zylinder 56 mit einem Druck auch als Hebeeinrichtungen wirksam werden können.

Des Weiteren versteht es sich, dass die Abstandhalter 50 in einer alternativen Ausführungsform, in welcher beispielsweise pneumatische Einrichtungen zur Anwendung kommen oder aber ein pneumatischer Druckausgleich vorgesehen ist, auch federnd ausgebildet sein können.

Wie unmittelbar ersichtlich, umgeben die Abstandhalter 50 jeweils die Durchgangsöffnungen 34, welche ihrerseits die Führungsstangen 26 umgeben. Hierbei zeigt ein Vergleich der Figuren 1 und 2, dass dieses insbesondere in der senkrechten Projektion entlang der Pressrichtung 14, wie sie aus der Figur 2 unmittelbar nachvollziehbar ist, der Fall ist. Darüber hinaus sind die Abstandhalter 50 jeweils rotationssymmetrisch bezüglich der Durchgangsöffnungen 34 angeordnet. Hierbei versteht es sich, dass in einer anderen Ausführungsform auch einzelne Abstandhalter als Teilabstandhalter symmetrisch um die jeweiligen Durchgangsöffnungen 34 bzw. deren Mittelachsen 36 vorgesehen sein können.

Wie insbesondere aus Figur 2 ersichtlich, sind die beiden Abstandhalter 50 darüber hinaus spiegel- bzw. rotationssymmetrisch bezüglich einer Stempelachse 16, welche parallel zur Pressrichtung 14 und mittig parallel bezüglich der aufgebrachten Presskräfte vorgesehen ist, angeordnet. Wie unmittelbar nachvollziehbar, sind sowohl die Durchgangsöffnungen 34 als auch die Führungsstangen 26 und die Abstandhalter 50 echt parallel zu der Stempelachse 16 angeordnet. Auf diese Weise behindern die vorstehenden Baugruppen den Pressvorgang in keiner Weise und bedingen durch ihre symmetrische Ausgestaltung auch eine Minimierung der Gefahr etwaiger Fehlstellungen.

Entsprechende Abstandhalter 50 - auch lediglich ein entsprechender Abstandhalter - können auch an der Unterseite der Matrizenplatte 30 bzw. an der Fußplatte 42 vorgesehen sein, um auch dort die vorstehend beschriebenen Vorteile umsetzen zu können.

**Bezugszeichenliste:**

| | | | |
|---|---|---|---|
| 10 | Pulverpresse | 40 | Kopfplatte |
| 12 | Pressschlitten | 42 | Fußplatte |
| 14 | Pressrichtung | 44 | Oberstempel |
| 16 | Stempelachse | 48 | Rad |
| 18 | Aufbaugestell | 50 | Abstandhalter |
| 20 | Pulverpressenadapter | 52 | Kolben |
| 22 | Matrizenträger | 54 | Haltefläche |
| 24 | Gegenjoch | 56 | Zylinder |
| 26 | Führungsstange | 58 | Leitung |
| 28 | Gleitlager | 80 | Oberkolben |
| 30 | Matrizenplatte | 82 | Pressenoberteil |
| 32 | Matrize | 84 | Zuganker |
| 34 | Durchgangsöffnung | 86 | Pressunterteil |
| 36 | Mittelachse der Durchgangsöffnung | 88 | Adapterklemmeinrichtung |

## Patentansprüche

1. Pulverpressenadapter (20) mit wenigstens einem Matrizenträger (22) und mit wenigstens einem gegen den Matrizenträger (22) verlagerbaren Gegenjoch (24), **gekennzeichnet**
a. **durch** einen zwischen dem Matrizenträger (22) und dem Gegenjoch (24) wirksamen, fluidisch abstandhaltende Kräfte aufbringenden Abstandhalter (50), der einen Zylinder (56) und einen Kolben (52) umfasst, und/oder
b. **durch** eine zwischen dem Matrizenträger (22) und dem Gegenjoch (24) wirksame, fluidisch angetriebene Hebeeinrichtung, die einen Zylinder (56) und einen Kolben (52) umfasst,
wobei
(i) der Zylinder (56) und/oder der Kolben (52) eine Durchgangsöffnung (34) durch den Matrizenträger (22) bzw. durch das Gegenjoch (24) und/oder eine Führungsstange (26) umgibt;
und/oder
(ii) wobei der Abstandshalter (50) bzw. die Hebeeinrichtung eine Baugruppe innerhalb des Matrizenträgers (22) und/oder des Gegenjochs (24) umfasst; und/oder
(iii) wobei der Abstandhalter (50) in einem ersten seiner Betriebszustände abstandhaltend und einem zweiten seiner Betriebszustände nachgiebig ausgebildet ist.

2. Pulverpresse (10) mit wenigstens einem Matrizenträger (22) und mit wenigstens einem gegen den Matrizenträger (22) verlagerbaren und Presskräfte in einem zentralen Bereich von einem Pressstempel in Richtung der Matrizenträger direkt oder indirekt übertragenden Gegenjoch (24), **gekennzeichnet**
a. **durch** einen zwischen dem Matrizenträger (22) und dem Gegenjoch (24) wirksamen, fluidisch abstandhaltende Kräfte aufbringenden Abstandhalter (50) der einen Zylinder (56) und einen Kolben (52) umfasst, und/oder
b. **durch** eine zwischen dem Matrizenträger (22) und dem Gegenjoch (24) wirksame, fluidisch angetriebene Hebeeinrichtung, die einen Zylinder (56) und einen Kolben (52) umfasst,
(i) wobei der Zylinder (56) und/oder der Kolben (52) eine Durchgangsöffnung (34) durch den Matrizenträger (22) bzw. durch das Gegenjoch (24) und/oder eine Führungsstange (26) umgibt;
und/oder
(ii) wobei der Abstandshalter (50) bzw. die Hebeeinrichtung eine Baugruppe innerhalb des Matrizenträgers (22) und/oder des Gegenjochs (24) umfasst; und/oder
(iii) wobei der Abstandhalter (50) in einem ersten seiner Betriebszustände abstandhaltend und einem zweiten seiner Betriebszustände nachgiebig ausgebildet ist.

3. Pulverpressenadapter nach Anspruch 1 oder Pulverpresse nach Anspruch 2, **dadurch gekennzeichnet, dass** die Durchgangsöffnung (34) und/oder die Führungsstange (26) echt parallel zu einer Stempelachse (16) vorgesehen ist.

4. Pulverpressenadapter nach einem der Ansprüche 1 und 3 oder Pulverpresse nach einem der Ansprüche 2 und 3, **dadurch gekennzeichnet, dass** die Durchgangsöffnung (34) eine Führungsstange (26) umgibt.

5. Pulverpressenadapter nach einem der Ansprüche 1 und 3 bis 4 oder Pulverpresse nach einem der Ansprüche 2 bis 4, **dadurch gekennzeichnet, dass** die Baugruppe ein Zylinder (56) und/oder ein Kolben (52) des Abstandhalter (50) bzw. der Hebeeinrichtung ist.

6. Pulverpressenadapter nach einem der Ansprüche 1 und 3 bis 5 oder Pulverpresse nach einem der Ansprüche 2 bis 5, **dadurch gekennzeichnet, dass** der Abstandhalter (50) und/oder die Hebeeinrichtung symmetrisch bezüglich einer echt parallel zu einer Stempelachse (16) vorgesehenen Durchgangsöffnung (34) durch den Matrizenträger (22) und/oder durch das Gegenjoch (24) ausgebildet ist.

7. Pulverpresse oder Pulverpressenadapter nach Anspruch 6, **dadurch gekennzeichnet, dass** die Durchgangsöffnung (34) eine Führungsstange (26) umgibt.

8. Pulverpresse oder Pulverpressenadapter nach Anspruch 6 oder 7, **dadurch gekennzeichnet, dass** der Abstandhalter (50) bzw. die Hebeeinrichtung die Durchgangsöffnung (34) umgibt.

9. Pulverpressenadapter nach einem der Ansprüche 1 und 3 bis 8 oder Pulverpresse nach einem der Ansprüche 2 bis 8, **dadurch gekennzeichnet, dass** der Abstandhalter (50) federnd ausgebildet ist.

10. Pulverpressenadapter nach einem der Ansprüche 1 und 3 bis 9 oder Pulverpresse nach einem der Ansprüche 2 bis 9, **dadurch gekennzeichnet, dass** der Abstandhalter (50) bzw. die Hebeeinrichtung echt parallel zu einer Stempelachse (16) vorgesehen ist.

11. Pulverpressenadapter nach einem der Ansprüche 1 und 3 bis 10 oder Pulverpresse nach einem der Ansprüche 2 bis 10, **dadurch gekennzeichnet, dass** der Abstandhalter (50) bzw. die Hebeeinrichtung eine Verriegelung aufweist.

12. Pulverpressenadapter nach einem der Ansprüche 1 und 3 bis 11 oder Pulverpresse nach einem der Ansprüche 3 bis 11, **gekennzeichnet durch** wenigstens zwei derartige parallel wirksame Abstandhalter (50) bzw. Hebeeinrichtungen.

13. Verfahren zum Betrieb einer Pulverpresse (10), bei welchem ein Matrizenträger (22) und wenigstens ein gegen den Matrizenträger (22) verlagerbares Gegenjoch (24) während eines ersten Betriebszustandes durch einen Abstandhalter (50) in einem definierten Abstand gehalten und während eines zweiten Betriebszustandes diesbezüglich freigegeben werden, **dadurch gekennzeichnet, dass** der Abstandhalter (50) einen Zylinder (56) und einen Kolben (52) umfasst, und dass der Abstandhalter (50) für die Freigabe des Matrizenträgers (22) und des Gegenjochs (24) in Richtung des definierten Abstands freigegeben wird und fluidisch abstandhaltende Kräfte aufbringt.

14. Verfahren nach Anspruch 13, **dadurch gekennzeichnet, dass** zum Freigeben des Abstandhalters (50) dieser entriegelt wird.

## Claims

1. A powder press adapter (20) having at least one die carrier (22) and having at least one counter yoke (24) displaceable relative to the die carrier (22), **characterized**
a. **by** a spacer (50) comprising a cylinder (56) and a piston (52), which is effective between the die carrier (22) and the counter yoke (24) and which fluidically exerts forces that maintain spacing;
and/or
b. **by** a lifting device comprising a cylinder (56) and a piston (52), which is effective between the die carrier (22) and the counter yoke (24) and which is driven fluidically;
wherein
(i) the cylinder (56) and/or the piston (52) surround (s) a passage opening (34) in the die carrier (22) or, correspondingly, in the counter yoke (24), and/or surround(s) a guide rod (26) ;
and/or
(ii) wherein the spacer (50) or, respectively, the lifting device comprises an assembly within the die carrier (22) and/or the counter yoke (24);
and/or
(iii) wherein the spacer (50) is designed to maintain a spacing in a first of one of its operating states and designed to be flexible in a second of one of its operating states.

2. A powder press (10) having at least one die carrier (22) and having at least one counter yoke (24) displaceable relative to the die carrier (22) and directly or indirectly transferring pressing forces in a central region from a punch in the direction of the die carriers, **characterized**
a. **by** a spacer (50) comprising a cylinder (56) and a piston (52), which is effective between the die carrier (22) and the counter yoke (24) and which fluidically exerts forces that maintain spacing;
and/or
b. **by** a lifting device comprising a cylinder (56) and a piston (52), which is effective between the die carrier (22) and the counter yoke (24) and which is driven fluidically;
(i) wherein the cylinder (56) and/or the piston (52) surround(s) a passage opening (34) in the die carrier (22) or, correspondingly, in the counter yoke (24), and/or surround(s) a guide rod (26) ;
and/or
(ii) wherein the spacer (50) or, respectively, the lifting device comprises an assembly within the die carrier (22) and/or the counter yoke (24);
and/or
(iii) wherein the spacer (50) is designed to maintain a spacing in a first of one of its operating states and designed to be flexible in a second of one of its operating states.

3. The powder press adapter according to Claim 1 or the powder press according to Claim 2, **characterized in that** the passage opening (34) and/or the guide rod (26) is/are provided parallel to, but not on, a punch axis (16).

4. The powder press adapter according to any one of Claims 1 and 3 or the powder press according to any one of Claims 2 and 3, **characterized in that** the passage opening (34) surrounds a guide rod (26).

5. The powder press adapter according to any one of Claims 1 and 3 to 4 or the powder press according to any one of Claims 2 to 4, **characterized in that** the assembly is a cylinder (56) and/or a piston (52) of the spacer (50) or, correspondingly, of the lifting device.

6. The powder press adapter according to any one of Claims 1 and 3 to 5 or the powder press according to any one of Claims 2 to 5, **characterized in that** the spacer (50) and/or the lifting device are designed symmetrically with regards to a passage opening (34) which is provided parallel to, but not on, a punch axis (16), said opening reaching through the die carrier (22) and/or through the counter yoke (24).

7. The powder press or the powder press adapter according to Claim 6, **characterized in that** the passage opening (34) surrounds a guide rod (26).

8. The powder press or the powder press adapter according to Claim 6 or 7, **characterized in that** the spacer (50) or, correspondingly, the lifting device surrounds the passage opening (34).

9. The powder press adapter according to any one of Claims 1 and 3 to 8 or the powder press according to any one of Claims 2 to 8, **characterized in that** the spacer (50) is designed to have a spring action.

10. The powder press adapter according to any one of Claims 1 and 3 to 9 or the powder press according to any one of Claims 2 to 9, **characterized in that** the spacer (50) or, correspondingly, the lifting device is provided parallel to, but not on, to a punch axis (16) .

11. The powder press adapter according to any one of Claims 1 and 3 to 10 or the powder press according to any one of Claims 2 to 10, **characterized in that** the spacer (50) or, correspondingly, the lifting device has a locking mechanism.

12. The powder press adapter according to any one of Claims 1 and 3 to 11 or the powder press according to any one of Claims 3 to 11, **characterized by** at least two such spacers (50) or, correspondingly, lifting devices, which are effective parallel to each other.

13. A method for operating a powder press (10), in which a die carrier (22) and at least one counter yoke (24) displaceable relative to the die carrier (22) are held at a defined distance to each other by a spacer (50) during a first operating state and the same are released in this regard during a second operating state, **characterized in that** the spacer (50) comprises a cylinder (56) and a piston (52), and that the spacer (50) is released and fluidically exerts forces which maintain spacing in order to release the die carrier (22) and the counter yoke (24) in the direction of the defined distance.

14. The method according to Claim 13, **characterized in that** the spacer (50) is unlocked in order to be released.

## Revendications

1. Adaptateur de presse à poudre (20) avec au moins un support de matrice (22) et avec au moins une entretoise antagoniste (24) déplaçable vers le support de matrice (22), **caractérisé**
a. **par** un support d'écartement (50) appliquant une force actif entre le support de matrice (22) et l'entretoise antagoniste (24), maintenant à distance de façon fluidique, qui comprend un vérin (56) et un piston (52),
et/ou
b. **par** un dispositif de levage actif, entre le support de matrice (22) et l'entretoise antagoniste (24), entraîné de façon fluidique, qui comprend un vérin (56) et un piston (52),
sachant que
(i) sachant que le vérin (56) et/ou le piston (52) entoure une ouverture de passage (34) à travers le support de matrice (22) ou à travers l'entretoise antagoniste (24) et/ou une barre de guidage (26),
et/ou
(ii) sachant que le support d'écartement (50) ou le dispositif de levage comprend un ensemble à l'intérieur du support de matrice (22) et/ou de l'entretoise antagoniste (24),
et/ou
(iii) sachant que le support d'écartement (50) est constitué maintenant à distance dans un premier de ses états de fonctionnement et de façon flexible dans un deuxième de ses état de fonctionnement.

2. Adaptateur de presse à poudre (10) avec au moins un support de matrice (22) et avec au moins une entretoise antagoniste (24) déplaçable vers le support de matrice (22) et transmettant directement ou indirectement une force de compression dans une zone centrale par un piston de presse en direction des supports de matrice, **caractérisé**
a. **par** un support d'écartement (50) appliquant une force actif entre le support de matrice (22) et l'entretoise antagoniste (24), maintenant à distance de façon fluidique, qui comprend un vérin (56) et un piston (52),
et/ou
b. **par** un dispositif de levage actif entre le support de matrice (22) et l'entretoise antagoniste (24) entraîné par fluide, qui comprend un vérin (56) et un piston (52),
(i) sachant que le vérin (56) et/ou le piston (52) entoure une ouverture de passage (34) à travers le support de matrice (22) ou à travers l'entretoise antagoniste (24) et/ou une barre de guidage (26),
et/ou
(ii) sachant que le support d'écartement (50) ou le dispositif de levage comprend un ensemble à l'intérieur du support de matrice (22) et/ou de l'entretoise antagoniste (24),
et/ou
(iii) sachant que le support d'écartement (50) est constitué maintenant à distance dans un premier de ses états de fonctionnement et de façon flexible dans un deuxième de ses état de fonctionnement.

3. Adaptateur de presse à poudre selon la revendication 1 ou presse à poudre selon la revendication 2, **caractérisé en ce que** l'ouverture de passage (34) et/ou la barre de guidage (26) est prévue bien parallèle à un axe de piston (16).

4. Adaptateur de presse à poudre selon l'une quelconque des revendications 1 à 3 ou presse à poudre selon l'une quelconque des revendications 2 et 3, **caractérisé en ce que** l'ouverture de passage (34) entoure une barre de guidage (26).

5. Adaptateur de presse à poudre selon l'une quelconque des revendications 1 et 3 à 4 ou presse à poudre selon l'une quelconque des revendications 2 à 4, **caractérisé en ce que** l'ensemble est un vérin (56) et/ou un piston (52) du support d'écartement (50) ou du dispositif de levage.

6. Adaptateur de presse à poudre selon l'une quelconque des revendications 1 et 3 à 5 ou presse à poudre selon l'une quelconque des revendications 2 à 5, **caractérisé en ce que** le support d'écartement (50) et/ou le dispositif de levage est constitué symétriquement eu égard à une ouverture de passage (34) prévue bien parallèle à un axe de piston (16) à travers le support de matrice (22) et/ou à travers l'entretoise antagoniste (24).

7. Adaptateur de presse à poudre selon la revendication 6, **caractérisé en ce que** l'ouverture de passage (34) entoure une barre de guidage (26).

8. Presse à poudre ou adaptateur de presse à poudre selon la revendication 6 ou 7, **caractérisé en ce que** le support d'écartement (50) ou le dispositif de levage entoure l'ouverture de passage (34).

9. Adaptateur de presse à poudre selon l'une quelconque des revendications 1 et 3 à 8 ou presse à poudre selon l'une quelconque des revendications 2 à 8, **caractérisé en ce que** le support d'écartement (50) est constitué à ressort.

10. Adaptateur de presse à poudre selon l'une quelconque des revendications 1 et 3 à 9 ou presse à poudre selon l'une quelconque des revendications 2 à 9, **caractérisé en ce que** le support d'écartement (50) ou le dispositif de levage est prévu bien parallèle à un axe de piston (16).

11. Adaptateur de presse à poudre selon l'une quelconque des revendications 1 et 3 à 10, ou presse à poudre selon l'une quelconque des revendications 2 à 10, **caractérisé en ce que** le support d'écartement (50) ou le dispositif de levage comporte un verrouillage.

12. Adaptateur de presse à poudre selon l'une quelconque des revendications 1 et 3 à 11 ou presse à poudre selon l'une quelconque des revendications 3 à 11, **caractérisé par** au moins deux supports d'écartement (50) ou dispositif de levage pareils parallèlement actifs.

13. Procédé de fonctionnement d'une presse à poudre (10), pour lequel un support de matrice (22) et au moins une entretoise antagoniste (24) déplaçable vers le support de matrice (22) sont maintenus pendant un premier état de fonctionnement, à une distance définie à travers un support d'écartement (50) et sont libérés à cet effet pendant un deuxième état de fonctionnement, **caractérisé en ce que** le support d'écartement (50) comprend un vérin (56) et un piston (52) et **en ce que** le support d'écartement (50) est libéré en direction de la distance définie pour la libération du support de matrice (22) et de l'entretoise antagoniste (24).

14. Procédé selon la revendication 13, **caractérisé en ce que** pour libérer le support d'écartement (50) ce dernier est déverrouillé.
